# EUROPÄISCHE PATENTSCHRIFT

(11) **EP 4 012 351 B1**
(45) Veröffentlichungstag und Bekanntmachung des Hinweises auf die Patenterteilung: **08.02.2023**
(21) Anmeldenummer: 20212350.1
(22) Anmeldetag: 08.12.2020
(51) Int. Cl.: G01D 5/20

(54) **ABTASTELEMENT UND INDUKTIVE POSITIONSMESSEINRICHTUNG MIT DIESEM ABTASTELEMENT**
SCANNING ELEMENT AND INDUCTIVE POSITION MEASURING DEVICE WITH THE SAME
ÉLÉMENT DE DÈTECTION ET DISPOSITIF DE MESURE DE POSITION INDUCTIF POURVU DUDIT ÉLÉMENT DE DÉTECTION

(43) Veröffentlichungstag der Anmeldung: 15.06.2022
(73) Patentinhaber: Dr. Johannes Heidenhain GmbH, 83301 Traunreut (DE)
(72) Erfinder: HEINEMANN, Christoph, 83236 Übersee (DE); HEUMANN, Martin, 83278 Traunstein (DE); TIEMANN, Marc Oliver, 83329 Waging am See (DE)

(56) Entgegenhaltungen:
- EP-A2- 2 182 329
- DE-A1-102018 107 416
- JP-A- 2006 208 239
- US-A1- 2017 227 380
- US-A1- 2019 310 148

## Beschreibung

### GEBIET DER TECHNIK

Die Erfindung betrifft ein Abtastelement für eine induktive Positionsmesseinrichtung gemäß dem Anspruch 1 zur Positionsbestimmung des Abtastelements relativ zu zwei mit unterschiedlicher Geschwindigkeit drehbaren Skalenelementen sowie eine Positionsmesseinrichtung mit einem derartigen Abtastelement.

Induktive Positionsmesseinrichtungen werden beispielsweise als Winkelmessgeräte zur Bestimmung der Winkelposition von relativ zueinander drehbaren Maschinenteilen verwendet. Bei induktiven Positionsmesseinrichtungen sind häufig Erregerspuren und Empfängerspuren etwa in Form von Leiterbahnen auf einer gemeinsamen meist mehrlagigen Leiterplatte aufgebracht, die beispielsweise mit einem Stator eines Winkelmessgeräts fest verbunden ist. Dieser Leiterplatte gegenüber befindet sich ein Skalenelement, auf dem Teilungsstrukturen aufgebracht sind, und welches mit dem Rotor des Winkelmessgeräts drehfest verbunden ist. Wenn an den Erregerspuren ein zeitlich wechselnder elektrischer Erregerstrom angelegt wird, werden in den Empfängerspulen während der Relativdrehung zwischen Rotor und Stator von der Winkelposition abhängige Signale erzeugt. Diese Signale werden dann in einer Auswerteelektronik weiterverarbeitet.

Insbesondere werden bei Antrieben von Robotern häufig induktive Positionsmesseinrichtungen als Messgeräte für die Bestimmung der Winkellage einer Antriebswelle und gleichzeitig für die exakte Bestimmung der Winkellage einer Abtriebswelle eingesetzt, wobei die Bewegung der Antriebswelle durch ein Untersetzungsgetriebe in die Abtriebswelle eingeleitet wird. In diesem Fall werden Winkelpositionen beziehungsweise Winkelstellungen mithilfe eines Abtastelements gemessen, welches eine Leiterplatte umfasst, die an beiden Seiten entsprechende Detektoreinheiten aufweist, so dass die jeweilige Winkelstellung von beidseitig der Leiterplatte drehbar angeordneten Skalenelementen bestimmt werden kann.

### STAND DER TECHNIK

In der JP 2006208239 A, insbesondere gemäß der dortigen Figur 6, ist eine Positionsmesseinrichtung mit zwei Rotoren, zwischen welchen ein Stator angeordnet ist, offenbart. Die dort beschriebene Positionsmesseinrichtung kommt beispielsweise in einer Mikrometerschraube zum Einsatz.

In der WO 2019/185336 A1 wird ein Abtastelement mit einer Sendespule und Sensorspulen beschrieben, die auf einer mehrlagigen Leiterplatte angeordnet sind, wobei die Leiterplatte Lagen aufweist, die als Abschirmung ausgebildet sind.

Ferner ist aus der US 2019/0310148 A1 eine Einrichtung zum Messen von Drehmomenten bekannt, die ein Abtastelement aufweist, das als eine mehrlagige Leiterplatte ausgestaltet ist. Basierend auf einem induktiven Prinzip sind zu beiden Seiten der Leiterplatte Sendestrukturen und Sensorstrukturen vorgesehen.

### ZUSAMMENFASSUNG DER ERFINDUNG

Der Erfindung liegt die Aufgabe zugrunde ein kompaktes und kostengünstig herstellbares aber dennoch vergleichsweise genau arbeitendes Abtastelement für eine induktive Positionsmesseinrichtung zu schaffen, durch welches eine Bestimmung von Positionen beziehungsweise Winkelstellungen zweier Skalenelemente ermöglicht ist.

Diese Aufgabe wird erfindungsgemäß durch die Merkmale des Anspruches 1 gelöst.

Das Abtastelement, welches für eine induktive Positionsmesseinrichtung geeignet und bestimmt ist, umfasst eine mehrlagige Leiterplatte, die eine erste

Detektoreinheit, eine zweite Detektoreinheit und eine erste Abschirmschicht aufweist. Die erste Detektoreinheit ist in einer ersten Lage und in einer zweiten Lage der Leiterplatte angeordnet. Die zweite Detektoreinheit ist in einer dritten Lage und in einer vierten Lage der Leiterplatte angeordnet. Die erste Abschirmschicht ist in einer fünften Lage der Leiterplatte angeordnet. Zudem weist die Leiterplatte eine geometrische Mittenebene auf, die zwischen den Detektoreinheiten angeordnet ist. Weiterhin weist die Leiterplatte Vias auf, welche in einer Richtung, die parallel zur Mittenebene orientiert ist, versetzt zueinander angeordnet sind. Die fünfte Lage der Leiterplatte ist so strukturiert, dass neben der ersten Abschirmschicht und bezüglich dieser ersten Abschirmschicht elektrisch isoliert ein Steg angeordnet ist. Dieser Steg ist mit den Vias elektrisch kontaktiert, wobei folglich die Vias durch den Steg elektrisch miteinander verbunden sind.

Die Strukturierung der ersten Abschirmschicht kann durch einen Ätzprozess erfolgen, so dass ein zur ursprünglichen Schicht elektrisch isolierter Steg in der fünften Lage entsteht. Alternativ kann die Abschirmschicht durch ein additives Verfahren hergestellt werden, so dass dann über diesen Weg im Ergebnis eine strukturierte Lage der Leiterplatte vorliegt.

In weiterer Ausgestaltung der Erfindung weisen die Detektoreinheiten zumindest eine Erregerspur auf, wobei die zumindest eine Erregerspur zumindest eine Erregerleiterbahn umfasst und zumindest eines der Vias mit der Erregerleiterbahn elektrisch verbunden ist.

In vorteilhafter Weise ist das Abtastelement so ausgestaltet, dass die erste Detektoreinheit eine erste Erregerspur und eine erste Empfängerspur aufweist und die zweite Detektoreinheit eine zweite Erregerspur und eine zweite Empfängerspur aufweist, Insbesondere können die erste Erregerspur und die zweite Erregerspur elektrisch in Serie geschaltet sein. Vorteilhafterweise sind die erste Empfängerspur und die zweite Empfängerspur in Umfangsrichtung um eine Achse umlaufend angeordnet. Die erste Empfängerspur umfasst erste Empfängerleiterbahnen und die zweite Empfängerspur umfasst zweite Empfängerleiterbahnen. Diese Empfängerleiterbahnen weisen jeweils einen periodischen Verlauf auf.

Im Hinblick auf eine Festlegung der räumlichen Anordnung des Erfindungsgegenstandes kann zunächst eine erste Richtung x definiert werden. Die erste Richtung x stellt diejenige Richtung dar, in welcher die gesuchte Position gemessen wird (Messrichtung). Da durch die Positionsmesseinrichtung jeweils bezogen auf eine Dreh- oder Schwenkbewegung um eine (Dreh-) Achse eine erste relative Winkelstellung zwischen dem ersten Skalenelement und dem Abtastelement gemessen werden soll und zugleich eine zweite Winkelstellung zwischen dem zweiten Skalenelement und dem Abtastelement, ist die erste Richtung x eine Umfangsrichtung beziehungsweise eine Tangentialrichtung.

Zudem kann eine zweite Richtung y definiert werden, die orthogonal zur ersten Richtung x verläuft.

Orthogonal zur ersten Richtung x und gleichzeitig orthogonal zur zweiten Richtung y ist eine dritte Richtung z orientiert. Die dritte Richtung z verläuft parallel zur (Dreh-) Achse, um welche ein Skalenelement relativ zum Abtastelement drehbar ist. Zudem ist die dritte Richtung z orthogonal zur Mittenebene ausgerichtet. Die einzelnen Lagen der Leiterplatte sind in der dritten Richtung z zueinander versetzt angeordnet. Außerdem sind die Vias in der ersten Richtung x und / oder in der zweiten Richtung y zueinander versetzt angeordnet.

Üblicherweise sind die beiden größten (Außen-) Flächen einer Leiterplatte parallel zueinander orientiert. Die Mittenebene ist insbesondere in der Mitte zwischen diesen Leiterplattenflächen parallel zu den Flächen angeordnet, so dass insbesondere in der dritten Richtung z der Abstand zwischen einer Fläche der Leiterplatte zur Mittenebene genauso groß ist wie der Abstand zwischen der anderen Fläche der Leiterplatte zur Mittenebene.

In weiterer Ausgestaltung der Erfindung verlaufen die erste Erregerspur und die zweite Erregerspur entlang der Umfangsrichtung beziehungsweise entlang der ersten Richtung x.

Mit Vorteil weisen die Detektoreinheiten jeweils zumindest eine Empfängerspur auf, wobei zumindest eine der Empfängerspuren zumindest eine Empfängerleiterbahn umfasst und zumindest eines der Vias mit dieser Empfängerleiterbahn elektrisch verbunden ist.

In vorteilhafter Weise ist das Abtastelement so ausgestaltet, dass die erste Detektoreinheit eine erste Empfängerspur und die zweite Detektoreinheit eine zweite Empfängerspur aufweist, wobei die erste Empfängerspur und die zweite Empfängerspur entlang der Umfangsrichtung beziehungsweise entlang der ersten Richtung x verlaufen wie auch die erste Erregerspur und die zweite Erregerspur.

In weiterer Ausgestaltung der Erfindung weisen die ersten Empfängerleiterbahnen einen periodischen Verlauf mit einer ersten Periodenlänge λ1 auf und die zweiten Empfängerleiterbahnen einen periodischen Verlauf mit einer zweiten Periodenlänge λ2. Die zweite Periodenlänge λ2 ist größer oder gleich der ersten Periodenlänge λ1 (λ2 ≥ λ1).

Vorteilhafterweise ist der Steg von einem elektrisch isolierendem Spalt umgeben und die Leiterplatte umfasst eine zweite Abschirmschicht die bezüglich des Steges in der dritten Richtung z, die orthogonal zur Mittenebene orientiert ist, versetzt angeordnet ist und zudem überlappend zum Spalt angeordnet ist. Durch die Strukturierung der fünften Lage der Leiterplatte ist also eine elektrisch leitende Schicht unterbrochen, so dass ein Spalt in der elektrisch leitenden Schicht vorliegt, der elektrisch isolierend wirkt.

In weiterer Ausgestaltung der Erfindung umfasst die Leiterplatte eine zweite Abschirmschicht, die in einer sechsten Lage der Leiterplatte angeordnet ist, wobei die geometrische Mittenebene zwischen den Abschirmschichten angeordnet ist.

Mit Vorteil umfasst die Leiterplatte elektronische Bauteile. Insbesondere kann zumindest eines der elektronischen Bauteile Bestandteil einer Schaltung zur Generierung eines Erregerstromes sein, welcher über den Steg in zumindest eine der Erregerleiterbahnen einspeisbar ist.

Mit Vorteil sind die erste Erregerspur und die zweite Erregerspur mit einem Erregerstrom bestrombar, welcher üblicherweise eine zeitlich wechselnde Stromstärke aufweist (Wechselstrom oder Mischstrom). Der Erregerstrom ist mit Hilfe der elektronischen Bauteile generierbar, das heißt, dass dessen Verlauf von den elektronischen Bauteilen formbar ist. Nachdem ein physikalischer Zusammenhang zwischen der Stromstärke und der Spannungsstärke existiert, kann natürlich die gleiche Betrachtung auch für die Erregerspannung vorgenommen werden.

Vorteilhafterweise ist zumindest eines der Vias als ein blind via (elektrisch leitend beschichtetes Sackloch) oder als ein buried via (vergrabenes Loch) ausgeführt.

In weiterer Ausgestaltung der Erfindung sind die elektronischen Bauteile Bestandteil einer Auswerteschaltung, in der Signale, die von der zumindest einen Empfängerleiterbahn empfangbar sind, weiterverarbeitbar sind. Insbesondere sind diejenigen Signale, die von der ersten Empfängerspur und der zweiten Empfängerspur erzeugbar sind, mit Hilfe der elektronischen Bauteile, die insbesondere eine Auswerteschaltung bilden, weiterverarbeitbar.

Die elektronischen Bauteile können also Elemente verschiedener elektronischer Schaltungen sein beziehungsweise unterschiedlichen Schaltungen zugeordnet sein. Beispielsweise können bestimmte elektronische Bauteile Elemente der Schaltung zur Generierung eines Erregerstroms sein oder weitere elektronische Bauteile können Elemente einer weiteren Schaltung zur Auswertung beziehungsweise Weiterverarbeitung von Signalen sein.

In vorteilhafter Ausgestaltung der Erfindung sind die zweite Detektoreinheit und zumindest eines der elektronischen Bauteile auf derselben Seite der Leiterplatte angeordnet. Bei dieser Bauweise befinden sich also die zweite Detektoreinheit und das elektronische Bauteil in gleicher Richtung versetzt zur Mittenebene, so dass die Mittenebene nicht zwischen der zweiten Detektoreinheit und dem elektronischen Bauteil angeordnet ist.

Gemäß einem weiteren Aspekt umfasst die Erfindung auch eine induktive Positionsmesseinrichtung mit dem Abtastelement sowie einem ersten Skalenelement und einem zweiten Skalenelement. Die Skalenelemente sind in der dritten Richtung z (orthogonal zur Mittenebene) beabstandet, beidseits der Leiterplatte angeordnet.

Mit Vorteil weist das erste Skalenelement einen ersten Durchmesser D1 auf und das zweite Skalenelement einen zweiten Durchmesser d, wobei der erste Durchmesser D1 größer ist als der zweite Durchmesser d2 (D1 > d).

Weiterhin können die Skalenelemente um eine gemeinsame Achse relativ zum Abtastelement drehbar angeordnet sein.

Mit Vorteil weist die erste Detektoreinheit eine dritte Empfängerspur auf und die zweite Detektoreinheit eine vierte Empfängerspur. Insbesondere kann dann die dritte Empfängerspur dritte Empfängerleiterbahnen umfassen, wobei die dritten Empfängerleiterbahnen einen periodischen Verlauf aufweisen und die Periodenlänge der dritten Empfängerleiterbahnen kleiner ist als die erste Periodenlänge λ1 der ersten Empfängerleiterbahnen. Weiterhin kann die vierte Empfängerspur vierte Empfängerleiterbahnen umfassen, wobei die vierten Empfängerleiterbahnen einen periodischen Verlauf aufweisen und die Periodenlänge der vierten Empfängerleiterbahnen größer ist als die zweite Periodenlänge λ2 der zweiten Empfängerleiterbahnen.

In weiterer Ausgestaltung der Erfindung weist die erste Detektoreinheit eine dritte Erregerspur und die zweite Detektoreinheit eine vierte Erregerspur auf.

Die Mittenebene kommt bezogen auf die dritte Richtung z zwischen der ersten Detektoreinheit und der ersten Abschirmschicht zu liegen. Folglich gilt ebenso, dass die Mittenebene bezogen auf die dritte Richtung z zwischen der zweiten Detektoreinheit und der zweiten Abschirmschicht zu liegen kommt beziehungsweise gilt, dass die zweite Detektoreinheit und die zweite Abschirmschicht beidseits der Mittenebene angeordnet sind.

Zudem kann zumindest eines der elektronischen Bauteile von der Achse weiter beabstandet angeordnet sein als die Außenkontur des zweiten Skalenelements. Das zumindest eine elektronische Bauteil ist dann also radial außerhalb des zweiten Skalenelements angeordnet.

Vorteilhafte Ausbildungen der Erfindung entnimmt man den abhängigen Ansprüchen.

Weitere Einzelheiten und Vorteile des erfindungsgemäßen Abtastelements ergeben sich aus der nachfolgenden Beschreibung eines Ausführungsbeispiels anhand der beiliegenden Figuren.

### KURZE BESCHREIBUNG DER ZEICHNUNGEN

- Figur 1: eine perspektivische Ansicht einer Positionsmesseinrichtung umfassend ein Abtastelement und ein erstes Skalenelement sowie ein zweites Skalenelement,
- Figur 2: eine Draufsicht auf eine erste Seite des Abtastelements,
- Figur 3: eine Detailansicht auf die erste Seite des Abtastelements,
- Figur 4: eine Draufsicht auf eine zweite Seite des Abtastelements
- Figur 5: eine Detailansicht auf die zweite Seite des Abtastelements,
- Figur 6: ein Detailschnitt P - P durch das Abtastelement,
- Figur 7: eine weitere Detailansicht auf die zweite Seite des Abtastelements
- Figur 8: eine Draufsicht auf die fünfte Lage der Leiterplatte in einem Bereich, in dem sich Vias befinden,
- Figur 9: ein Detailschnitt durch das Abtastelement im Bereich zweier Vias,
- Figur 10: eine Draufsicht auf ein erstes Skalenelement,
- Figur 11: eine Draufsicht auf ein zweites Skalenelement.

### BESCHREIBUNG DER AUSFÜHRUNGSFORMEN

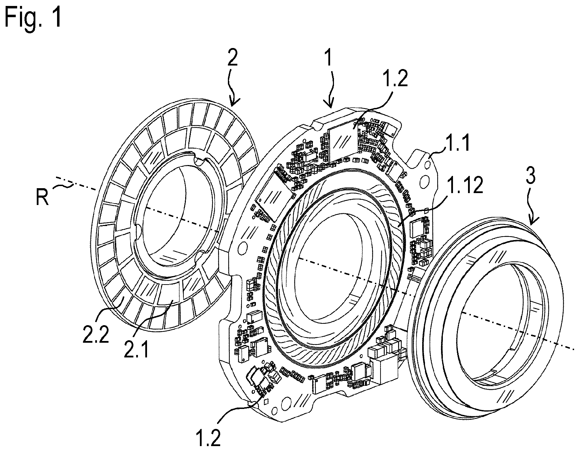

Die Erfindung wird gemäß der Figur 1 anhand einer Positionsmesseinrichtung beschrieben, welche ein Abtastelement 1 aufweist, das sowohl zur Erfassung einer Winkelstellung eines ersten Skalenelements 2 als auch einer Winkelstellung eines zweiten Skalenelements 3 verwendet werden kann. Beide Skalenelemente 2, 3 sind um eine Achse R relativ zum Abtastelement 1 drehbar angeordnet. Eine derartige Positionsmesseinrichtung kann beispielsweise in einer Antriebseinrichtung eines Roboters verwendet werden. Das zweite Skalenelement 3 ist dann etwa mit einer Antriebswelle eines Motors drehfest verbunden. Diese ist wiederum mit einem Untersetzungsgetriebe verbunden, welches eine Abtriebswelle aufweist. Mit dieser Abtriebswelle dreht sich das erste Skalenelement 2. Auf diese Weise kann beispielsweise eine Winkelstellung zur Kommutierung des Motors mit Hilfe des zweiten Skalenelements 3 und eine vergleichsweise hochgenaue Winkelstellung zur Positionierung des Roboters mit Hilfe des ersten Skalenelements 2 durchgeführt werden.

Das Abtastelement 1 umfasst eine Leiterplatte 1.1, welche mehrere Lagen aufweist, sowie elektronische Bauteile 1.2, die auf der Leiterplatte 1.1 montiert sind. Das Abtastelement 1 dient zur Abtastung des ersten Skalenelements 2 und gleichzeitig zur Abtastung des zweiten Skalenelements 3. Im vorgestellten Ausführungsbeispiel sind elektronische Bauteile 1.2 nur auf der zweiten Seite montiert. Alternativ oder ergänzend könnte aber auch die erste Seite der Leiterplatte 1.1 mit elektronischen Bauteilen bestückt werden.

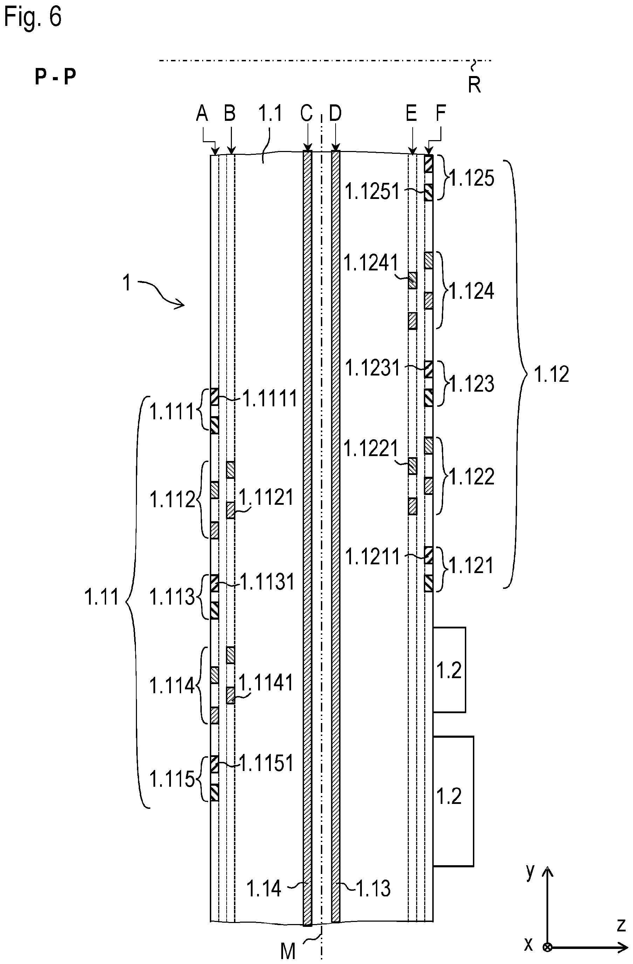

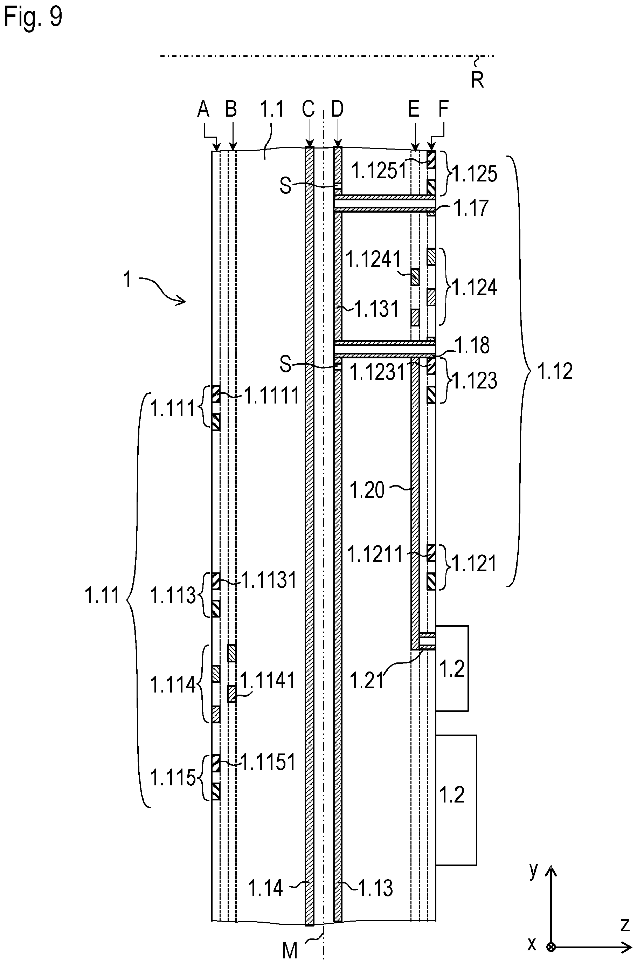

Zur Bestimmung der Winkelinformationen sind auf einer ersten Seite der Leiterplatte 1.1 eine erste Detektoreinheit 1.11 und auf einer zweiten Seite der Leiterplatte 1.1 eine zweite Detektoreinheit 1.12 angeordnet. In der Figur 1 sind nur diejenigen Strukturen der zweiten Detektoreinheit 1.12 zu sehen, die sich auf einer äußeren vierten Lage F (siehe die Figuren 6 und 9) befinden.

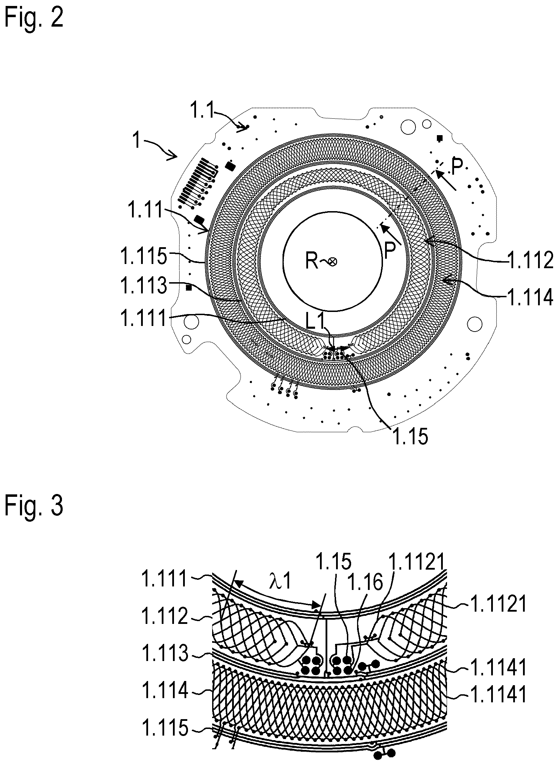

In den Figuren 2 und 3 (die Figur 3 ist eine vergrößerte Detailansicht der ersten Detektoreinheit 1.11 gemäß der Figur 2) sind unter anderem diejenigen Strukturen der ersten Detektoreinheit 1.11 gezeigt, die sich in einer äußeren ersten Lage A der Leiterplatte 1.1 und in einer zweiten Lage B der Leiterplatte 1.1 befinden. Die erste Detektoreinheit 1.11 umfasst eine erste Erregerspur 1.111, eine erste Empfängerspur 1.112, eine dritte Erregerspur 1.113, eine dritte Empfängerspur 1.114 und eine fünfte Erregerspur 1.115. Die erste Empfängerspur 1.112 umfasst erste Empfängerleiterbahnen 1.1121.

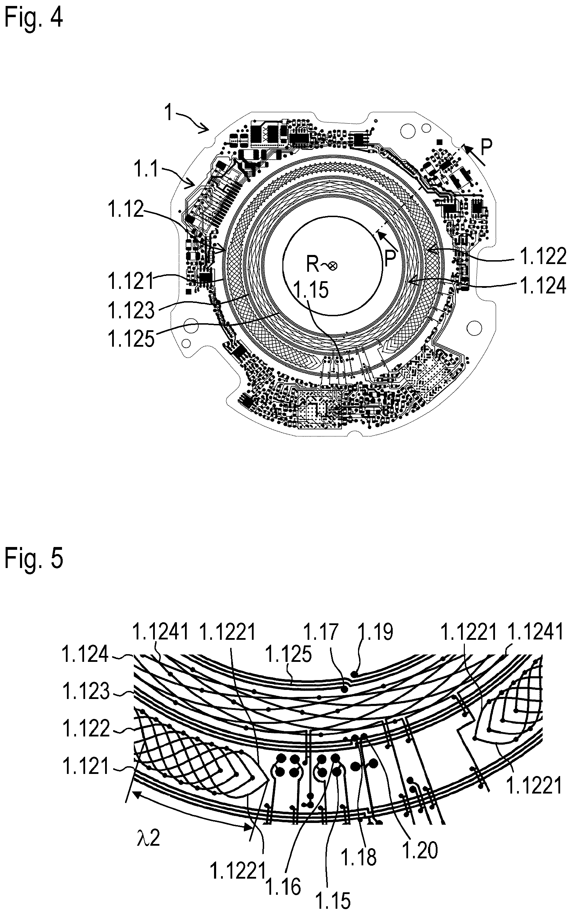

In den Figuren 4 und 5 ist die Leiterplatte 1.1 von der anderen Seite gezeigt, so dass die zweite Detektoreinheit 1.12 sichtbar ist. Die Figur 5 zeigt ein Detail der zweiten Detektoreinheit 1.12 in Vergrößerung. In den Figuren 4 und 5 sind unter anderem diejenigen Strukturen der zweiten Detektoreinheit 1.12 gezeigt, die sich in der äußeren vierten Lage F der Leiterplatte 1.1 und in einer dritten Lage E der Leiterplatte 1.1 befinden. Die zweite Detektoreinheit 1.12 umfasst eine zweite Erregerspur 1.121, eine zweite Empfängerspur 1.122, eine vierte Erregerspur 1.123, eine vierte Empfängerspur 1.124 und eine sechste Erregerspur 1.125. Die zweite Empfängerspur 1.122 umfasst zweite Empfängerleiterbahnen 1.1221.

In der Figur 6 ist eine schematische Teilschnittdarstellung gemäß der Schnittlinie P-P durch das Abtastelement 1 beziehungsweise der Leiterplatte 1.1 gezeigt, wobei der Übersichtlichkeit halber auf eine Schraffur von elektrisch isolierendem Material der Leiterplatte 1.1 verzichtet wurde. Zudem ist die Teilschnittdarstellung der Figur 6 zur besseren Erläuterbarkeit des erfindungsgemäßen Abtastelements 1 nicht maßstabsgetreu ausgeführt. Die Leiterplatte 1.1 ist, wie oben bereits erwähnt, mehrlagig aufgebaut. Geometrisch betrachtet kann für die Leiterplatte 1.1 eine so genannte Mittenebene M definiert werden, die parallel zur ersten Seite beziehungsweise parallel zur zweiten Seite der Leiterplatte 1.1 mittig zwischen der ersten und zweiten Seite angeordnet ist. Zudem können die geometrischen Beziehungen der einzelnen Elemente zueinander mit Hilfe eines Koordinatensystems definiert werden. Dabei ist eine erste Richtung x diejenige Richtung, entlang welcher bestimmungsgemäß eine Positions- beziehungsweise Winkelmessung erfolgen soll. Im vorgestellten Ausführungsbeispiel entspricht die erste Richtung x der Umfangsrichtung. Die Achse R, um welche die Skalenelemente 2, 3 drehbar sind, verläuft parallel zu einer dritten Richtung z, die dritte Richtung z kann demnach hier auch als axiale Richtung definiert werden. Orthogonal zur dritten Richtung z und zur ersten Richtung x ist eine zweite Richtung y orientiert, die auch als radiale Richtung bezeichnet werden kann. Somit ist eine Ebene, die von der x- und y-Achse aufgespannt wird, parallel zur Mittenebene M orientiert und die dritte Richtung z sowie die Achse R verlaufen orthogonal zur Mittenebene M.

In der ersten Lage A der Leiterplatte 1.1 und in der zweiten Lage B der Leiterplatte 1.1 ist die erste Detektoreinheit 1.11 angeordnet, während in der dritten Lage E und in der vierten Lage F die zweite Detektoreinheit 1.12 angeordnet ist. Die erste Lage A ist der ersten Seite der Leiterplatte 1.1 am nächsten gelegen und die zweite Lage B ist der ersten Seite der Leiterplatte 1.1 am zweitnächsten gelegen. Gleiches gilt für die vierte Lage F und die dritte Lage E bezüglich der zweiten Seite der Leiterplatte 1.1.

Die Erregerspuren 1.111, 1.113, 1.115 der ersten Detektoreinheit 1.11 umfassen Erregerleiterbahnen 1.1111, 1.1131, 1.1151, die in der ersten Lage A verlaufen. Analog hierzu umfassen die Erregerspuren 1.121, 1.123, 1.125 der zweiten Detektoreinheit 1.12 Erregerleiterbahnen 1.1211, 1.1231, 1.1251 die in der vierten Lage F verlaufen.

Zudem umfasst die Leiterplatte 1.1 auch eine fünfte Lage D und eine sechste Lage C. In der fünften Lage D befindet sich eine erste Abschirmschicht 1.13 und in der sechsten Lage C eine zweite Abschirmschicht 1.14. Die Abschirmschichten 1.13, 1.14 sind hier vergleichsweise großflächige Kupferschichten.

Die Erregerspuren 1.111, 1.113, 1.115 der ersten Detektoreinheit 1.11 umschließen die erste Empfängerspur 1.112 beziehungsweise die dritte Empfängerspur 1.114.

Die Erregerspuren 1.121, 1.123, 1.125 der zweiten Detektoreinheit 1.12 umschließen die zweite Empfängerspur 1.122 beziehungsweise die vierte Empfängerspur 1.124. Sowohl die Erregerspuren 1.111, 1.113, 1.115, 1.121, 1.123, 1.125 als auch die Empfängerspuren 1.112, 1.114, 1.122, 1.124 verlaufen entlang der Umfangsrichtung beziehungsweise entlang der ersten Richtung x.

Jede der Empfängerspuren 1.112, 1.114, 1.122, 1.124 umfasst im vorgestellten Ausführungsbeispiel jeweils Empfängerleiterbahnen 1.1121, 1.1141, 1.1221, 1.1241, die in Umfangsrichtung versetzt angeordnet sind, so dass diese dem Versatz entsprechend vier phasenverschobene Signale liefern können. In den Figuren sind diejenigen Empfängerleiterbahnen 1.1121, 1.1141, 1.1221, 1.1241, welche ein und derselben Empfängerspur 1.112, 1.114, 1.122, 1.124 angehören, mit nur einem Bezugszeichen versehen. Folglich sind also beispielsweise alle Empfängerleiterbahnen 1.1121 der ersten Empfängerspur 1.112 mit nur einem Bezugszeichen versehen. Zudem verlaufen die ersten Empfängerleiterbahnen 1.1121 der ersten Detektoreinheit 1.11 mit Vias verbunden in unterschiedlichen Lagen der Leiterplatte 1.1, so dass an Kreuzungspunkten unerwünschte Kurzschlüsse vermieden werden. Das Gleiche gilt auch für die Empfängerleiterbahnen 1.1221, 1.1241 der zweiten Detektoreinheit 1.12. Wenngleich genau genommen jede der ersten und zweiten Empfängerleiterbahnen 1.1121, 1.1221 aus vielen Leiterstücken, die jeweils auf zwei Ebenen beziehungsweise Lagen verteilt und aneinandergereiht sind, wird im Folgenden eine derartige Struktur zusammenfassend als eine Empfängerleiterbahn 1.1221, 1.1241 bezeichnet.

Die Empfängerleiterbahnen 1.1121, 1.1141, 1.1221, 1.1241 weisen einen räumlich periodischen Verlauf auf, der im Wesentlichen sinusförmig beziehungsweise sinusartig ausgestaltet ist. Die Empfängerleiterbahnen 1.1121 der ersten Empfängerspur 1.112 weisen eine Periodenlänge λ1 (Figur 3) auf, während die Empfängerleiterbahnen 1.1221 der zweiten Empfängerspur 1.122 eine Periodenlänge λ2 (Figur 5) aufweisen. Im vorgestellten Ausführungsbeispiel sind innerhalb einer Empfängerspur 1.112, 1.114, 1.122, 1.124 benachbarte Empfängerleiterbahnen 1.1121, 1.1141, 1.1221, 1.1241 um 1/8 der vollen Sinusperiode (um π/4 oder 45° entlang der Umfangsrichtung oder ersten Richtung x) zueinander versetzt angeordnet. Die Empfängerleiterbahnen 1.1121, 1.1141, 1.1221, 1.1241 sind elektrisch so verschaltet, dass diese zum einen 0° und 90°-Signale liefern und zum anderen 45° und 135°-Signale. Aus den 0° und 90°-Signalen kann ein erstes Positionssignal bestimmt werden und aus den 45° und 135°-Signalen kann ein bezüglich des ersten Positionssignals redundantes zweites Positionssignal bestimmt werden.

Im vorgestellten Ausführungsbeispiel ist die zweite Periodenlänge λ2 größer als die erste Periodenlänge λ1.

Zudem weist die Leiterplatte 1.1 Durchkontaktierungen 1.15, 1.16 gemäß den Figuren 4 und 5 auf. Die Durchkontaktierungen 1.15, 1.16 durchdringen demnach die Leiterplatte 1.1 über deren komplette Dicke. Mit Hilfe der Durchkontaktierung 1.15, werden erste Empfängerleiterbahnen 1.1121 der ersten Empfängerspur 1.112 mit einem elektronischen Bauteil 1.2, das jenseits der Mittenebene M angeordnet ist, elektrisch verbunden. Zu diesem Zweck wird durch eine Leiterbahn, die in der zweiten Lage B verläuft, mit einer in der Figur 6 nicht sichtbaren ersten Empfängerleiterbahn 1.1121 ein elektrischer Kontakt zur Durchkontaktierung 1.15 hergestellt. Die Durchkontaktierung 1.15 durchdringt die erste Abschirmschicht 1.13 und die zweite Abschirmschicht 1.14, wobei die Abschirmschichten 1.13, 1.14 so strukturiert sind, dass diese nicht elektrisch mit der Durchkontaktierung 1.15 verbunden sind. In der dritten Lage E ist nun ein Kontakt zu einer in dieser Lage verlaufenden Leiterbahn hergestellt, über die zusammen mit einer weiteren Durchkontaktierung letztlich der Kontakt zum elektronischen Bauteil 1.2 hergestellt wird. Die weitere Durchkontaktierung 1.16 verbindet die ersten Empfängerleiterbahnen 1.1121, die in der zweiten Lage B verlaufen mit der vierten Lage F. Über Leiterbahnen, die in den Figuren nicht sichtbar sind, wird ein elektrischer Kontakt zum elektronischen Bauteil 1.2 hergestellt.

Die erste Empfängerspur 1.112 ist in der zweiten Richtung y überlappend in Bezug auf die zweite Empfängerspur 1.122 angeordnet.

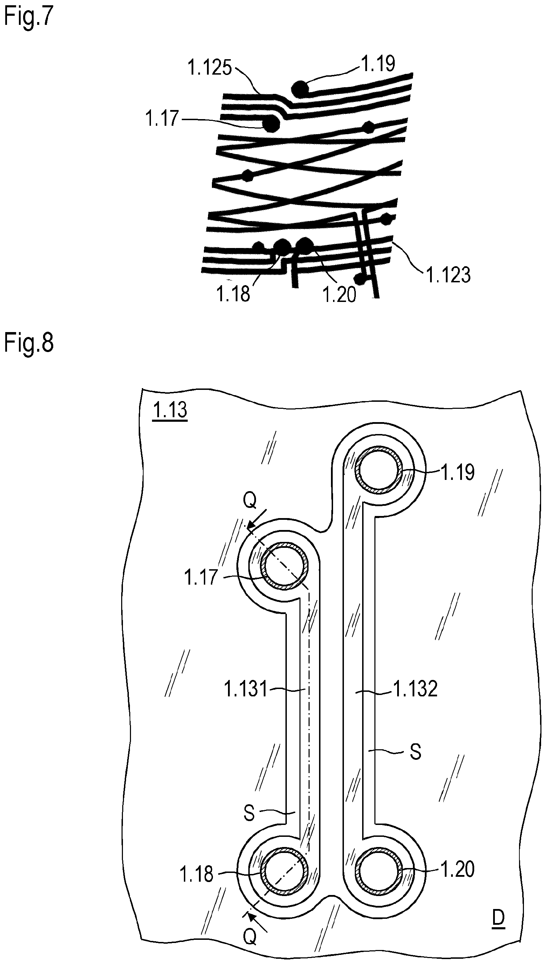

Wie in die Figuren 7 bis 9 dargestellt, ist die sechste Erregerspur 1.125 mit den Enden von Vias 1.17, 1.19 verbunden und die vierte Erregerspur 1.123 mit den Enden von weiteren Vias 1.18, 1.20. Die Vias 1.17, 1.18, 1.19, 1.20 sind als blind vias ausgestaltet und enden in der fünften Lage D der Leiterplatte 1.1. Gemäß der Figur 8 ist die fünfte Lage D, welche ursprünglich als eine durchgehende Kupferschicht ausgestaltet war, so strukturiert, dass in der x,y-Ebene neben der ersten Abschirmschicht 1.13 und Stege 1.131, 1.132 angeordnet sind . Durch einen Spalt S, in dem das Material (hier z.B. Kupfer) der fünften Lage D entfernt wurde, sind die Stege 1.131, 1.132 bezüglich (beziehungsweise gegenüber) der ersten Abschirmschicht 1.13 elektrisch isoliert. Der erste Steg 1.131 ist elektrisch mit den Vias 1.17, 1.18 kontaktiert. Da der erste Steg 1.131 aus elektrisch leitfähigem Material besteht, werden also die Vias 1.17, 1.18 durch den ersten Steg 1.131 elektrisch miteinander verbunden. Gleiches gilt für die Vias 1.19, 1.20 und dem zweiten Steg 1.132. Alternativ können die Vias 1.17, 1.18, 1.19, 1.20 als buried vias ausgestaltet sein und ein Verbindung zwischen der fünften Lage D und der dritten Lage E herstellen, wobei dann die Anbindung der vierten Lage F an die dritte Lage E über zusätzliche micro vias erfolgen kann.

In der Figur 9 ist eine schematische Teilschnittdarstellung entlang der Schnittlinie Q - Q durch das Abtastelement 1 beziehungsweise durch die Leiterplatte 1.1 gezeigt. Die Schnittlinie verläuft also insbesondere durch die Vias 1.17, 1.18 und den Steg 1.131. Durch diese Anordnung ist eine elektrische Verbindung zwischen der vierten Erregerspur 1.123 und der sechsten Erregerspur 1.125 hergestellt.

Die zweite Abschirmschicht 1.14, die in der dritten Richtung versetzt zur ersten Abschirmschicht 1.13 angeordnet ist, ist zumindest im Nahbereich der Stege 1.131, 1.132 durchgängig, so dass diese überlappend zum Spalt S angeordnet ist. Durch diese Maßnahme hat die Strukturierung der ersten Abschirmschicht 1.13 keine signifikante Reduzierung der Abschirmfunktion der beiden Abschirmschichten 1.13, 1.14 zur Folge.

Zudem ist das Via 1.18 gemäß der Figur 9 über eine elektrisch leitende Schicht 1.20 und über eine weitere Durchkontaktierung 1.21 mit dem elektronischen Bauteil 1.2 verbunden.

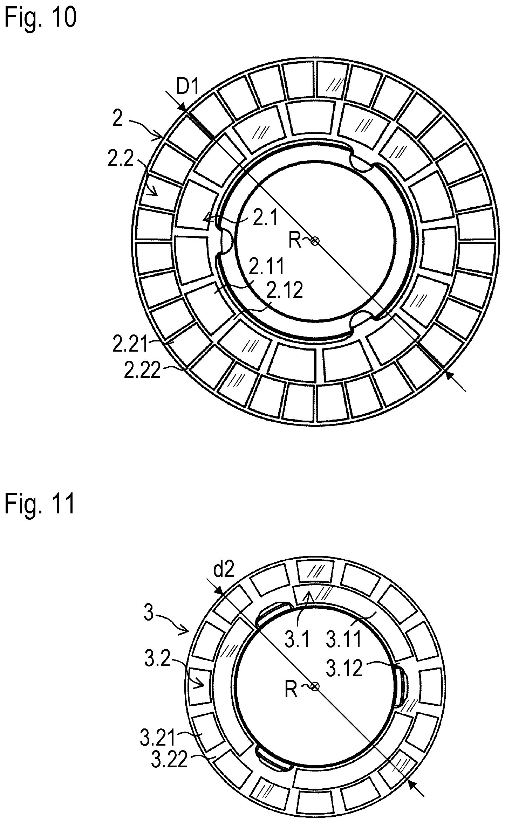

In der Figur 10 ist das erste Skalenelement 2 in einer Draufsicht gezeigt. Das zweite Skalenelement 3 ist in der Figur 11 ebenfalls in einer Draufsicht dargestellt. Die Skalenelemente 2, 3 weisen eine scheibenförmige Gestalt auf, wobei das erste Skalenelement 2 einen ersten Durchmesser D1 aufweist und das zweite Skalenelement 3 einen zweiten Durchmesser d2. Der erste Durchmesser D1 ist größer als der zweite Durchmesser d2 (D1 > d2).

Die Skalenelemente 2, 3 bestehen jeweils aus einem Substrat, welches im dargestellten Ausführungsbeispiel aus Epoxydharz hergestellt ist und auf denen jeweils zwei Teilungsspuren 2.1, 2.2; 3.1, 3.2 angeordnet sind. Die Teilungsspuren 2.1, 2.2; 3.1, 3.2 sind ringförmig ausgebildet und bezüglich der Achse R konzentrisch mit unterschiedlichem Durchmesser auf dem Substrat angeordnet. Die Teilungsspuren 2.1, 2.2; 3.1, 3.2 umfassen Teilungsstrukturen bestehend aus jeweils einer periodischen Abfolge von alternierend angeordneten elektrisch leitfähigen Teilungsbereichen 2.11, 2.21; 3.11, 3.21 und nichtleitfähigen Teilungsbereichen 2.12, 2.22; 3.12, 3.22. Als Material für die elektrisch leitfähigen Teilbereiche 2.11, 2.21; 3.11, 3.21 wurde im gezeigten Beispiel Kupfer auf das Substrat aufgebracht. In den nichtleitfähigen Teilungsbereichen 2.12, 2.22; 3.12, 3.22 wurde das Substrat dagegen nicht beschichtet. Durch die Anordnung mit jeweils zwei Teilungsspuren 2.1, 2.2; 3.1, 3.2 können die Winkelstellungen der Skalenelemente 2, 3 jeweils absolut bestimmt werden. Die äußerste Teilungsspur 2.2 des ersten Skalenelements 2 weist die größte Anzahl von Teilungsbereichen 2.21, 2.22 entlang einer Umfangslinie auf, so dass durch diese die größte Auflösung bezüglich der Messung der Winkelstellung erzielbar ist.

Im zusammengebauten Zustand gemäß der Figur 1 stehen sich das Abtastelement 1 und die Skalenelemente 2, 3 jeweils mit axialem Abstand beziehungsweise Luftspalt gegenüber, so dass bei einer Relativdrehung zwischen den Skalenelementen 2, 3 und dem Abtastelement 1 in den Empfängerleiterbahnen 1.1121, 1.1141, 1.1221, 1.1241 jeweils ein von der jeweiligen Winkelposition abhängiges Signal durch Induktionseffekte erzeugbar ist. Voraussetzung für die Bildung von entsprechenden Signalen ist, dass die Erregerleiterbahnen 1.1111, 1.1131, 1.1151, 1.1211, 1.1231, 1.1251 ein zeitlich wechselndes elektromagnetisches Erregerfeld im Bereich der jeweilig abgetasteten Teilungsstrukturen erzeugen. Im dargestellten Ausführungsbeispiel sind die Erregerleiterbahnen 1.1111,1.1131, 1.1151,1.1211,1.1231,1.1251 als mehrere planar-parallele stromdurchflossene Einzel-Leiterbahnen ausgebildet. Das Abtastelement 1 weist eine elektronische Schaltung mit den elektronischen Bauteilen 1.2 auf, die über die Lagen E und F miteinander elektrisch verbunden sind. Die elektronische Schaltung kann beispielsweise auch einen ASIC-Baustein umfassen. Diese elektronische Schaltung des Abtastelements 1 arbeitet nicht nur als Auswerteelement, sondern auch als Erregerkontrollelement, unter dessen Kontrolle der Erregerstrom generiert beziehungsweise erzeugt wird, welcher dann durch die Erregerleiterbahnen 1.1111, 1.1131, 1.1151, 1.1211, 1.1231, 1.1251 fließt. Somit werden die Erregerleiterbahnen 1.1111, 1.1131, 1.1151, 1.1211, 1.1231, 1.1251 durch ein und dasselbe Erregerkontrollelement bestromt. Dabei sind die erste Erregerspur 1.111 und die zweite Erregerspur 1.121 elektrisch in Serie geschaltet. Die Stromversorgung erfolgt hier ausgehend vom elektronischen Bauteil 1.2, das Bestandteil einer Schaltung zur Generierung eines Erregerstromes ist, über die Durchkontaktierung 1.21 auf die leitende Schicht 1.20 und über die beiden Stege 1.131, 1.132, so dass also der Erregerstrom über diese Stege 1.131, 1.132 geleitet wird. Auf diese Weise ist der Erregerstrom über die Stege 1.131, 1.132 in die Erregerleiterbahnen 1.1211, 1.1231, 1.1251 einspeisbar.

Werden die Erregerspuren 1.111, 1.113, 1.115, 1.121, 1.123, 1.125 bestromt, so bildet sich um die Erregerleiterbahnen 1.1111, 1.1131, 1.1151, 1.1211, 1.1231, 1.1251 ein schlauch- bzw. zylinderförmig orientiertes elektromagnetisches Feld aus. Die Feldlinien des resultierenden elektromagnetischen Feldes verlaufen um die Erregerspuren 1.111, 1.113, 1.115, 1.121, 1.123, 1.125, wobei die Richtung der Feldlinien in bekannter Art und Weise von der Stromrichtung in den Erregerleiterbahnen 1.1111, 1.1131, 1.1151, 1.1211, 1.1231, 1.1251 abhängt. Im Bereich der leitfähigen Teilbereiche 2.11, 2.21; 3.11, 3.21 werden Wirbelströme induziert, so dass jeweils eine von der Winkelstellung abhängige Modulation des Feldes erreicht wird. Entsprechend kann durch die Empfängerspuren 1.112, 1.114, 1.122, 1.124 jeweils die relative Winkelstellung gemessen werden. Die Paare von Empfängerleiterbahnen 1.1121, 1.1141, 1.1221, 1.1241 sind innerhalb ihrer Empfängerspur 1.112, 1.114, 1.122, 1.124 so angeordnet, dass diese jeweils um 90° phasenversetzte Signale liefern, so dass auch eine Bestimmung der Drehrichtung vorgenommen werden kann. Die Signale, die von den Empfängerspuren 1.112, 1.114, 1.122, 1.124 erzeugt werden, werden mit Hilfe von einigen der elektronischen Bauteile 1.2, die eine Auswerteschaltung bilden, weiterverarbeitet.

Durch die erste Abschirmschicht 1.13 und die zweite Abschirmschicht 1.14 kann eine negative Beeinflussung der beiden Detektoreinheiten 1.11, 1.12 im Hinblick auf die Messgenauigkeit weitgehend verhindert werden. Insbesondere wird ein unzulässig hohes Maß an Übersprechsignalen verhindert aber gleichzeitig eine allzu große Dämpfung der Erregerfelder vermieden. Zudem wird die elektromagnetische Störung der Detektoreinheiten 1.11, 1.12 durch die elektronischen Bauteile 1.2 oder aus externen Quellen unterbunden.

## Patentansprüche

1. Abtastelement (1) für eine induktive Positionsmesseinrichtung, das eine mehrlagige Leiterplatte (1.1) umfasst, die
- eine erste Detektoreinheit (1.11) aufweist, die in einer ersten Lage (A) und in einer zweiten Lage (B) angeordnet ist,
- eine zweite Detektoreinheit (1.12) aufweist, die in einer dritten Lage (E) und in einer vierten Lage (F) angeordnet ist und
- eine erste Abschirmschicht (1.13) aufweist, die in einer fünften Lage (D) zwischen der ersten Detektoreinheit (1.11) und der zweiten Detektoreinheit (1.12) angeordnet ist, wobei
die Leiterplatte (1.1) zudem eine geometrische Mittenebene (M) aufweist, die zwischen den Detektoreinheiten (1.11, 1.12) angeordnet ist und weiterhin Vias (1.17, 1.18) aufweist, welche in einer Richtung parallel zur Mittenebene (M) versetzt zueinander angeordnet sind, wobei
die fünfte Lage (D) einen Steg (1.131) aufweist und so strukturiert ist, dass neben der ersten Abschirmschicht (1.13) und bezüglich der ersten Abschirmschicht (1.13) elektrisch isoliert der Steg (1.131) angeordnet ist, welcher mit den Vias (1.17, 1.18) elektrisch kontaktiert ist und durch welchen die Vias (1.17, 1.18) elektrisch miteinander verbunden sind.

2. Abtastelement (1) gemäß dem Anspruch 1, wobei die Detektoreinheiten (1.11, 1.12) zumindest eine Erregerspur (1.111, 1.113, 1.115, 1.121, 1.123, 1.125) aufweisen, wobei die Erregerspur (1.111, 1.113, 1.115, 1.121, 1.123, 1.125) zumindest eine Erregerleiterbahn (1.1111, 1.1131, 1.1151, 1.1211 1.1231, 1.1251) umfasst und zumindest eines der Vias (1.17, 1.18) mit der Erregerleiterbahn (1.1111, 1.1131, 1.1151, 1.1211 1.1231, 1.1251) elektrisch verbunden ist.

3. Abtastelement (1) gemäß dem Anspruch 1 oder 2, wobei die Detektoreinheiten (1.11, 1.12) jeweils zumindest eine Empfängerspur (1.122, 1.114, 1.122, 1.124) aufweisen, wobei zumindest eine der Empfängerspuren (1.112, 1.114, 1.122, 1.124) zumindest eine Empfängerleiterbahn (1.1121, 1.1141, 1.1221, 1.1241) umfasst und zumindest eines der Vias (1.17, 1.18) mit der Empfängerleiterbahn (1.1121, 1.1141, 1.1221, 1.1241) elektrisch verbunden ist.

4. Abtastelement (1) gemäß einem der vorhergehenden Ansprüche, wobei der Steg (1.131) von einem elektrisch isolierendem Spalt (S) umgeben ist und die Leiterplatte (1.1) eine zweite Abschirmschicht (1.14) umfasst, die
- bezüglich des Steges (1.131) in einer Richtung (z), die orthogonal zur Mittenebene orientiert ist, versetzt angeordnet ist und
- überlappend zum isolierendem Spalt (S) angeordnet ist.

5. Abtastelement (1) gemäß einem der vorhergehenden Ansprüche, wobei die Leiterplatte (1.1) eine zweite Abschirmschicht (1.14) umfasst, die in einer sechsten Lage (C) der Leiterplatte (1.1) angeordnet ist, wobei die geometrische Mittenebene (M) zwischen den Abschirmschichten (1.13, 1.14) angeordnet ist.

6. Abtastelement (1) gemäß einem der vorhergehenden Ansprüche, wobei die Leiterplatte (1.1) elektronische Bauteile (1.2) umfasst.

7. Abtastelement (1) gemäß dem Anspruch 2, wobei die Leiterplatte (1.1) elektronische Bauteile (1.2) umfasst und zumindest eines der elektronischen Bauteile (1.2) Bestandteil einer Schaltung zur Generierung eines Erregerstromes ist, welcher über den Steg (1.131) in zumindest eine der Erregerleiterbahnen (1.1211, 1.1231, 1.1251) einspeisbar ist.

8. Abtastelement (1) gemäß einem der vorhergehenden Ansprüche, wobei zumindest eines der Vias (1.17, 1.18) als ein blind via oder ein buried via ausgeführt ist.

9. Abtastelement (1) gemäß dem Anspruch 6, wobei die elektronischen Bauteile (1.2) Bestandteil einer Auswerteschaltung sind, in der die Signale weiterverarbeitbar sind.

10. Induktive Positionsmesseinrichtung umfassend ein Abtastelement (1) gemäß einem der vorhergehenden Ansprüche sowie ein erstes Skalenelement (2) und ein zweites Skalenelement (3), wobei die Skalenelemente (2, 3) in einer dritten Richtung (z), die orthogonal zur Mittenebene (M) orientiert ist, beabstandet beidseits der Leiterplatte (1.11) angeordnet sind.

11. Induktive Positionsmesseinrichtung gemäß dem Anspruch 10, wobei die Skalenelemente (2, 3) um eine gemeinsame Achse (R) relativ zum Abtastelement (1) drehbar angeordnet sind.

12. Induktive Positionsmesseinrichtung gemäß dem Anspruch 10 oder 11, wobei das erste Skalenelement (2) einen ersten Durchmesser (D1) aufweist und das zweite Skalenelement (3) einen zweiten Durchmesser (d2) aufweist und der erste Durchmesser (D1) größer ist als der zweite Durchmesser (d2).

## Claims

1. Scanning element (1) for an inductive position measurement device, which comprises a multi-layered circuit board (1.1), which has
- a first detector unit (1.11) arranged in a first layer (A) and in a second layer (B),
- a second detector unit (1.12) arranged in a third layer (E) and in a fourth layer (F), and
- a first shielding layer (1.13) arranged in a fifth layer (D) between the first detector unit (1.11) and the second detector unit (1.12), wherein
the circuit board (1.1) additionally has a geometric centre plane (M), which is arranged between the detector units (1.11, 1.12) and furthermore has vias (1.17, 1.18) that are arranged with a mutual offset in a direction parallel to the centre plane (M), wherein
the fifth layer (D) has a bar (1.131) and is structured such that the bar (1.131) is arranged adjacent to the first shielding layer (1.13) and electrically insulated with respect to the first shielding layer (1.13), which bar is in electrical contact with the vias (1.17, 1.18) and electrically connects the vias (1.17, 1.18) to one another.

2. Scanning element (1) according to Claim 1, wherein the detector units (1.11, 1.12) have at least one exciter trace (1.111, 1.113, 1.115, 1.121, 1.123, 1.125), wherein the exciter trace (1.111, 1.113, 1.115, 1.121, 1.123, 1.125) comprises at least one exciter track (1.1111, 1.1131, 1.1151, 1.1211, 1.1231, 1.1251) and at least one of the vias (1.17, 1.18) is electrically connected to the exciter track (1.1111, 1.1131, 1.1151, 1.1211, 1.1231, 1.1251).

3. Scanning element (1) according to Claim 1 or 2, wherein the detector units (1.11, 1.12) each have at least one receiver trace (1.122, 1.114, 1.122, 1.124), wherein at least one of the receiver traces (1.112, 1.114, 1.122, 1.124) comprises at least one receiver conductor track (1.1121, 1.1141, 1.1221, 1.1241) and at least one of the vias (1.17, 1.18) is electrically connected to the receiver conductor track (1.1121, 1.1141, 1.1221, 1.1241).

4. Scanning element (1) according to any of the preceding claims, wherein the bar (1.131) is surrounded by an electrically insulating gap (S) and the circuit board (1.1) comprises a second shielding layer (1.14) which
- is arranged with an offset with respect to the bar (1.131) in a direction (z), which is oriented orthogonally to the centre plane, and
- is arranged in an overlapping manner with the insulating gap (S).

5. Scanning element (1) according to any of the preceding claims, wherein the circuit board (1.1) comprises a second shielding layer (1.14) arranged in a sixth layer (C) of the circuit board (1.1), wherein the geometric centre plane (M) is arranged between the shielding layers (1.13, 1.14).

6. Scanning element (1) according to any of the preceding claims, wherein the circuit board (1.1) comprises electronic components (1.2).

7. Scanning element (1) according to Claim 2, wherein the circuit board (1.1) comprises electronic components (1.2) and at least one of the electronic components (1.2) is an integral part of a circuit for generating an exciter current that is able to be fed into at least one of the exciter conductor tracks (1.1211, 1.1231, 1.1251) via the bar (1.131).

8. Scanning element (1) according to any of the preceding claims, wherein at least one of the vias (1.17, 1.18) is designed in the form of a blind via or a buried via.

9. Scanning element (1) according to Claim 6, wherein the electronic components (1.2) are integral parts of an evaluation circuit in which the signals are able to be processed further.

10. Inductive position measurement device comprising a scanning element (1) according to any of the preceding claims and a first scale element (2) and a second scale element (3), wherein the scale elements (2, 3) are arranged on both sides of the circuit board (1.11) at a distance from each other in a third direction (z), which is oriented orthogonally to the centre plane (M).

11. Inductive position measurement device according to Claim 10, wherein the scale elements (2, 3) are arranged so as to be rotatable about a common axis (R) relative to the scanning element (1).

12. Inductive position measurement device according to Claim 10 or 11, wherein the first scale element (2) has a first diameter (D1) and the second scale element (3) has a second diameter (d2) and the first diameter (D1) is greater than the second diameter (d2).

## Revendications

1. Elément de balayage (1) pour un dispositif de mesure de position inductif qui comprend une carte de circuits imprimés multicouche (1.1) qui présente
- une première unité de détection (1.11) qui est disposée dans une première couche (A) et dans une deuxième couche (B),
- une deuxième unité de détection (1.12) qui est disposée dans une troisième couche (E) et dans une quatrième couche (F), et
- une première couche de blindage (1.13) qui est disposée dans une cinquième couche (D) entre la première unité de détection (1.11) et la deuxième unité de détection (1.12), dans lequel
la carte de circuits imprimés (1.1) présente de plus un plan médian géométrique (M) qui est disposé entre les unités de détection (1.11, 1.12) et présente en outre des trous traversants (1.17, 1.18) qui sont disposés de manière décalée les uns par rapport aux autres dans une direction parallèle au plan médian (M), dans lequel
la cinquième couche (D) présente une barrette (1.131) et est structurée de telle sorte que la barrette (1.131) est disposée à côté de la première couche de blindage (1.13) et de manière électriquement isolée par rapport à la première couche de blindage (1.13), ladite barrette étant électriquement contactée par les trous traversants (1.17, 1.18) et reliant électriquement les trous traversants (1.17, 1.18) les uns aux autres.

2. Elément de balayage (1) selon la revendication 1, dans lequel les unités de détection (1.11, 1.12) présentent au moins une trace d'excitation (1.111, 1.113, 1.115, 1.121, 1.123, 1.125), la trace d'excitation (1.111, 1.113, 1.115, 1.121, 1.123, 1.125) comprenant au moins une piste conductive d'excitation (1.1111, 1.1131, 1.1151, 1.1211 1.1231, 1.1251), et au moins l'un des trous traversants (1.17, 1.18) est relié électriquement à la piste conductive d'excitation (1.1111, 1.1131, 1.1151, 1.1211 1.1231, 1.1251).

3. Elément de balayage (1) selon la revendication 1 ou 2, dans lequel les unités de détection (1.11, 1.12) présentent respectivement au moins une trace de réception (1.122, 1.114, 1.122, 1.124), dans lequel au moins l'une des traces de réception (1.112, 1.114, 1.122, 1.124) comprend au moins une piste conductive de réception (1.1121, 1.1141, 1.1221, 1.1241), et au moins l'un de trous traversants (1.17, 1.18) est relié électriquement à la piste conductive de réception (1.1121, 1.1141, 1.1221, 1.1241).

4. Elément de balayage (1) selon l'une quelconque des revendications précédentes, dans lequel la barrette (1.131) est entourée d'un entrefer électriquement isolant (S), et la carte de circuits imprimés (1.1) comprend une deuxième couche de blindage (1.14) qui est disposée
- de manière décalée par rapport à la barrette (1.131) dans une direction (z) qui est orientée de manière orthogonale par rapport au plan médian, et
- en chevauchement avec l'entrefer isolant (S).

5. Elément de balayage (1) selon l'une quelconque des revendications précédentes, dans lequel la carte de circuits imprimés (1.1) comprend une deuxième couche de blindage (1.14) qui est disposée dans une sixième couche (C) de la carte de circuits imprimés (1.1), dans lequel le plan médian géométrique (M) est disposé entre les couches de blindage (1.13, 1.14).

6. Elément de balayage (1) selon l'une quelconque des revendications précédentes, dans lequel la carte de circuits imprimés (1.1) comprend des composants électroniques (1.2).

7. Elément de balayage (1) selon la revendication 2, dans lequel la carte de circuits imprimés (1.1) comprend des composants électroniques (1.2) et au moins l'un des composants électroniques (1.2) fait partie d'un circuit pour générer un courant d'excitation qui peut être alimenté par l'intermédiaire de la barrette (1.131) dans au moins l'une des pistes conductives d'excitation (1.1211, 1.1231, 1.1251).

8. Elément de balayage (1) selon l'une quelconque des revendications précédentes, dans lequel au moins l'un des trous traversants (1.17, 1.18) est réalisé sous la forme d'un trou traversant borgne ou d'un trou traversant enterré.

9. Elément de balayage (1) selon la revendication 6, dans lequel les composants électroniques (1.2) font partie d'un circuit d'évaluation dans lequel les signaux peuvent être traités ultérieurement.

10. Dispositif de mesure de position inductif, comprenant un élément de balayage (1) selon l'une quelconque des revendications précédentes ainsi qu'un premier élément gradué (2) et un deuxième élément gradué (3), dans lequel les éléments gradués (2, 3) sont disposés dans une troisième direction (z) qui est orientée de manière orthogonale par rapport au plan médian (M), à distance des deux côtés de la carte de circuits imprimés (1.11).

11. Dispositif de mesure de position inductif selon la revendication 10, dans lequel les éléments gradués (2, 3) sont disposés en rotation autour d'un axe commun (R) par rapport à l'élément de balayage (1).

12. Dispositif de mesure de position inductif selon la revendication 10 ou 11, dans lequel le premier élément gradué (2) présente un premier diamètre (D1) et le deuxième élément gradué (3) présente un deuxième diamètre (d2), et le premier diamètre (D1) est supérieur au deuxième diamètre (d2).
